# EUROPÄISCHE PATENTANMELDUNG

(11) **EP 4 219 983 A1**
(43) Veröffentlichungstag der Anmeldung: **02.08.2023**
(21) Anmeldenummer: 23166461.6
(22) Anmeldetag: 19.08.2016
(51) Int. Cl.: F16H 57/08, F16H 1/28

(54) **PLANETENTRÄGER**

(62) Teilanmeldung aus: 20172987.8
(71) Anmelder: Flender GmbH, 46395 Bocholt (DE)
(72) Erfinder: KLEIN-HITPASS, Arno, 46395 Bocholt (DE)
(74) Vertreter: Michalski Hüttermann & Partner Patentanwälte mbB

(57) **Zusammenfassung**

Die Erfindung betrifft einen Planetenträger, aufweisend eine antriebsseitige Nabe (1), eine antriebsseitige äußere Wange (2a), eine abtriebsseitige Wange (5) und mindestens einen die beiden besagten Wangen (2a, 5) verbindenden Steg (4). Dabei weist die abtriebsseitige Wange (5) mindestens einen abtriebsseitigen Achssitz (6b) jeweils für ein abtriebsseitiges Ende einer Planetenachse auf. Der Planetenträger weist außerdem eine antriebsseitige innere Wange (8) auf, welche parallel zur antriebsseitigen äußeren Wange (2a) angeordnet ist und mindestens einen antriebsseitigen Achssitz (6a) jeweils für ein antriebsseitiges Ende einer Planetenachse aufweist.

## Beschreibung

Die vorliegende Erfindung betrifft einen Planetenträger.

Bei Planetenträgern mit zwei Wangen verdrehen sich die Wangen unter Last relativ zueinander. Die Höhe der Verdrehung hängt außer von dem auf den Planetenträger einwirkenden Drehmoment in hohem Maße von der Konstruktion des Planetenträgers ab. Eine solche Torsion eines Planetenträgers ist in Fig. 4 der WO2009/083657A1 (Moventas Oy) 09.07.2009 gezeigt.

Bei einem zweiwangigen Planetenträger ist es nicht möglich, durch eine Änderung der Stärken von Wangen oder Stegen die Relativverdrehung der beiden Wangen gegeneinander zu unterdrücken.

Aufgabe der vorliegenden Erfindung ist es, einen verbesserten Planetenträger bereitzustellen.

Diese Aufgabe wird erfindungsgemäß durch einen Planetenträger mit den in Anspruch 1 angegebenen Merkmalen gelöst.

Der Planetenträger weist eine antriebsseitige Nabe, eine antriebsseitige äußere Wange, eine abtriebsseitige Wange und mindestens einen die beiden besagten Wangen verbindenden Steg auf. Entsprechend der Drehmomenteinleitung von einem Antrieb in den Planetenträger und der Drehmomentausleitung von dem Planetenträger zu einem Abtrieb werden die Bauteile des Planetenträgers wie Naben, Wangen und Achssitze der Planetenachse mit den Positionsbestimmungen "antriebsseitig" bzw. "abtriebsseitig" unterschieden. Die abtriebsseitige Wange weist mindestens einen abtriebsseitigen Achssitz jeweils für ein abtriebsseitiges Ende einer Planetenachse auf. Der Planetenträger weist außerdem eine antriebsseitige innere Wange auf, welche parallel zur antriebsseitigen äußeren Wange angeordnet ist und mindestens einen antriebsseitigen Achssitz jeweils für ein antriebsseitiges Ende einer Planetenachse aufweist. Eine Planetenachse kann in korrespondierende Achssitze, die jeweils in der antriebsseitigen inneren Wange und der abtriebsseitigen Wange angeordnet sind, eingesetzt werden.

Dabei ist die Unterscheidung zwischen "innerer" und "äußerer" Wange dadurch definiert, dass bei Betrachtung des Planetenträgers entlang der Rotationsachse R des Planetenträgers von der Antriebsseite her die antriebsseitige äußere Wange näher beim Betrachter liegt als die antriebsseitige innere Wange; somit ist die antriebsseitige äußere Wange in einem "äußeren" Bereich des Planetenträgers angeordnet, wohingegen relativ dazu die antriebsseitige innere Wange weiter in einem "inneren" Bereich des Planetenträgers angeordnet ist.

Die antriebsseitige innere Wange lagert über deren Planetenachssitze die antriebsseitigen Planetenachsenden, die antriebsseitige äußere Wange ist mit den Stegen verbunden. Die Stege sind außerdem verbunden mit der abtriebsseitigen Wange. In der abtriebsseitigen Wange befinden sich ebenfalls Sitze für die Planetenachsen.

Antriebsseitig hat der Planetenträger zwei Wangen, eine innere und eine äußere. Durch die Parallelität der antriebsseitigen äußeren und inneren Wange bietet der erfindungsgemäße Planetenträger die Möglichkeit, die Drehsteifigkeit des inneren Lastpfads, welcher von der antriebsseitigen Nabe zu dem antriebsseitigen Achssitz führt, auf die Drehsteifigkeit des äußeren Lastpfads, welcher von der abtriebsseitigen Nabe zu dem abtriebsseitigen Achssitz führt, so abzustimmen, dass sich unter Last eine definierte Relativverdrehung des antriebsseitigen Achssitzes zu dem abtriebsseitigen Achssitz einstellt. Bei einer optimalen Abstimmung verdrehen sich die beiden Achssitze um dasselbe Maß, so dass die Planetenachse unter Last keine Schiefstellung erfährt.

Durch die Erfindung wird ein Planetenträger bereitgestellt, der relativ leicht ist und dessen Wangen sich unter Last kaum oder gar nicht relativ zueinander verdrehen.

Der Erfindung liegt die Erkenntnis zugrunde, dass der Planetenträger aus strukturmechanischer Sicht eine Torsionsfeder, d.h. eine Drehfeder, ist: Dabei sind die Sitze der Planetenachsen in den beiden Wangen über eine Torsionsfeder miteinander verbunden. Eine unter Last auftretende Verdrehung der Planetenträger-Wangen und die daraus resultierende Planetenachsschiefstellung lässt sich somit nur über eine Variation der Torsionssteifigkeit dieser Torsionsfeder variieren.

Durch eine Parallelisierung des Lastpfads vom Bereich der Drehmomenteinleitung an der antriebsseitigen Nabe zu den Planetenachssitzen der antriebsseitigen und zur abtriebsseitigen Wange kann deren relative rotatorische Verlagerung unter Last über Variation der Steifigkeit des inneren und des äußeren Lastpfads gesteuert werden. Unter Lastpfad versteht man den Pfad, auf dem die Kräfte aufgrund einer äußeren Belastung von der Antriebsseite durch den Planetenträger zur Abtriebsseite geleitet werden.

Die Drehsteifigkeit des äußeren ("langen") Lastpfads wird primär über die Dicke und die Breite der Stege und der Größe der Durchbrüche für die Planetenräder, d.h. die Gestalt der Stege, die Stärke der Wangen und den Durchmesser der antriebsseitigen Nabe beeinflusst. Die Drehsteifigkeit des inneren ("kurzen") Lastpfads wird primär über den Durchmesser und die Dicke der antriebsseitigen inneren Wange und ihre konstruktive Verbindung mit dem Planetenträger beeinflusst.

Zwischen der Drehmomenteinleitung und der ersten Drehmomentableitungsstelle, d.h. den antriebseitigen Planetenachssitzen, ist der Lastpfad zur zweiten Drehmomentableitungsstelle, d.h. den abtriebsseitigen Planetenachssitzen, so parallelisiert, dass die Torsionssteifigkeiten der beiden Pfade getrennt voneinander variiert werden können.

Durch die Trennung des Kraftflusses wird zusätzlich die Kerbe zwischen Planetenachsbohrungen zur antriebsseitigen Nabe hin entschärft bzw. die Kerbstellen entfallen.

Vorteilhafte Ausgestaltungen und Weiterbildungen der Erfindung sind in den abhängigen Ansprüchen angegeben.

Gemäß einer bevorzugten Ausgestaltung der Erfindung ist die antriebsseitige innere Wange an der antriebsseitigen Nabe und/oder an der antriebsseitigen äußeren Wange und/oder an dem mindestens einen Steg befestigt.

Im Fall, dass die antriebsseitige innere Wange an der antriebsseitigen Nabe verbunden ist, sind beide antriebsseitigen Wangen mit der antriebsseitigen Nabe verbunden. Von Vorteil im Falle einer Befestigung an der antriebsseitigen Nabe ist dabei, dass ein relativ langer Lastpfad zur Abstimmung auf den Lastpfad des zweiten, abtriebsseitigen Achssitzes zur Verfügung steht. Von Vorteil im Falle einer Befestigung an der antriebsseitigen äußeren Wange ist dabei, dass bei Gussoder Schweißbauteilen eine gute Zugänglichkeit zum Putzen der Übergänge erreicht wird. Von Vorteil im Falle einer Befestigung an dem mindestens einen Steg ist dabei, dass bei Gussoder Schweißbauteilen eine gute Zugänglichkeit zum Putzen der Übergänge erreicht wird. Des Weiteren sind in diesem Fall geringere Wandstärken ausreichend.

Gemäß einer bevorzugten Ausgestaltung der Erfindung ist die Drehsteifigkeit des inneren Lastpfads, welcher von der antriebsseitigen Nabe zu dem antriebsseitigen Achssitz führt, auf die Drehsteifigkeit des äußeren Lastpfads, welcher von der abtriebsseitigen Nabe zu dem abtriebsseitigen Achssitz führt, so abgestimmt, dass sich unter Last eine definierte Relativverdrehung des antriebsseitigen Achssitzes zu dem abtriebsseitigen Achssitz einstellt. Von Vorteil ist dabei, dass sich bei einer optimalen Abstimmung die beiden Achssitze um dasselbe Maß verdrehen, so dass die Planetenachse unter Last keine oder nur eine relativ geringe Schiefstellung erfährt.

Der Planetenträger kann für Windkraftgetriebe eingesetzt werden. Das ist von Vorteil, da bei Windkraftanlagen sehr hohe Drehmomente von der Antriebsseite (Rotorseite) in den Planetenträger eingeleitet werden.

Gemäß einer bevorzugten Ausgestaltung der Erfindung besteht der Planetenträger aus mehreren Teilen. Es ist möglich, dass der Planetenträger durch Schweißverbindungen oder Schraubverbindungen aus mehreren Einzelteilen zusammengebaut ist. Von Vorteil bei einer Zusammenstellung aus mehreren Bauteilen ist dabei, dass die Herstellung der antriebsseitigen Wangen erleichtert wird.

Gemäß einer bevorzugten Ausgestaltung der Erfindung ist der Planetenträger aus mehreren Einzelteilen durch Schweißverbindungen zusammengebaut, wobei entlang zumindest einer Teillänge der Schweißverbindungen Entlastungskerben angeordnet sind.

Gemäß einer bevorzugten Ausgestaltung der Erfindung ist bzw. sind bei einem aus Einzelteilen zusammengeschweißten Planetenträger ein oder mehrere Einzelteil(e) einfache zylindrische oder scheibenförmige Elemente. Beispielsweise kann der Grundkörper des Planetenträgers, d.h. das die Stege aufweisende Element, aus einem Zentralrohr mit Ausbrüchen für die Planeten gebildet sein. Außerdem kann die Verbindung der antriebsseitigen Nabe mit dem Zentralrohr über eine Torsionsscheibe erfolgen. Alle Schweißnähte sind vorzugsweise durchgeschweißt und geschlossen. Vorzugsweise sind die Schweißnähte als Rundnähte ausgeführt, d.h. es sind keine Kerben in der Schweißnaht vorhanden. Dabei sind die Schweißnähte vorzugsweise so platziert, dass Sie in relativ niedrig beanspruchten Bereichen liegen.

Im Planetenträger können beliebig viele Planeten gelagert sein. Übliche Planetenräder weisen drei oder vier Planeten auf. Es können aber auch weniger als drei oder mehr als vier Planetenräder in den Planetenträger eingesetzt werden.

Alle Wangen können eine beliebige Geometrie haben, z.B. als Vollscheiben, Speichenräder oder gewölbte Scheiben ausgebildet sein. Die Wangen, insbesondere die antriebsseitige innere Wange, können Einschnürungen und/oder Durchbrüche zwischen den Achssitzen aufweisen, durch deren Designparameter wie Anzahl, Lage, Größe, Form, etc. die Torsionssteifigkeit der Wangen beeinflusst werden kann.

Der Planetenträger kann aus einem beliebigen Material sein, z.B. aus Gusseisen, Stahl oder Kunststoffe, insbesondere glasfaserverstärkte Kunststoffe (GFK oder CFK).

Im Folgenden wird die Erfindung anhand mehrerer Ausführungsbeispiele unter Zuhilfenahme der beiliegenden Zeichnung erläutert. Es zeigt jeweils schematisch und nicht maßstabsgetreu:
- Fig. 1: einen herkömmlichen zweiwangigen Planetenträger im Längsschnitt;
- Fig. 2: eine erste Ausgestaltung eines erfindungsgemäßen Planetenträgers mit beidseitiger Nabenlagerung im Längsschnitt;
- Fig. 3: den Planetenträger gemäß Fig. 2 mit Planetenrad, Planetenachse und Planetenradlager im Längsschnitt;
- Fig. 4: eine weitere Ausgestaltung eines erfindungsgemäßen Planetenträgers mit beidseitiger Nabenlagerung im Längsschnitt;
- Fig. 5: eine weitere Ausgestaltung eines erfindungsgemäßen Planetenträgers mit beidseitiger Nabenlagerung im Längsschnitt;
- Fig. 6: eine weitere Ausgestaltung eines erfindungsgemäßen Planetenträgers mit einseitiger Lagerung im Längsschnitt;
- Fig. 7: eine weitere Ausgestaltung eines erfindungsgemäßen Planetenträgers mit einseitiger Lagerung im Längsschnitt;
- Fig. 8: eine perspektivische Ansicht eines Ausschnitts eines Planetenträgers ähnlich dem in Fig. 2;
- Fig. 9: eine weitere Ausgestaltung eines erfindungsgemäßen Planetenträgers mit beidseitiger Nabenlagerung im Längsschnitt;
- Fig. 10: eine vergrößerte Darstellung eines Details von Fig. 9;
- Fig. 11: eine vergrößerte Darstellung eines Details von Fig. 9;
- Fig. 12: eine vergrößerte Darstellung eines Details von Fig. 9;
- Fig. 13: eine weitere Ausgestaltung eines erfindungsgemäßen Planetenträgers mit beidseitiger Nabenlagerung im Längsschnitt;
- Fig. 14: eine weitere Ausgestaltung eines erfindungsgemäßen Planetenträgers mit beidseitiger Nabenlagerung im Längsschnitt;
- Fig. 15: eine Seitenansicht eines erfindungsgemäßen Planetenträgers;
- Fig. 16: die Draufsicht auf den Schnitt XV-XV aus Fig. 15; und
- Fig. 17 bis 19: mögliche Ausgestaltungen der Wangen.

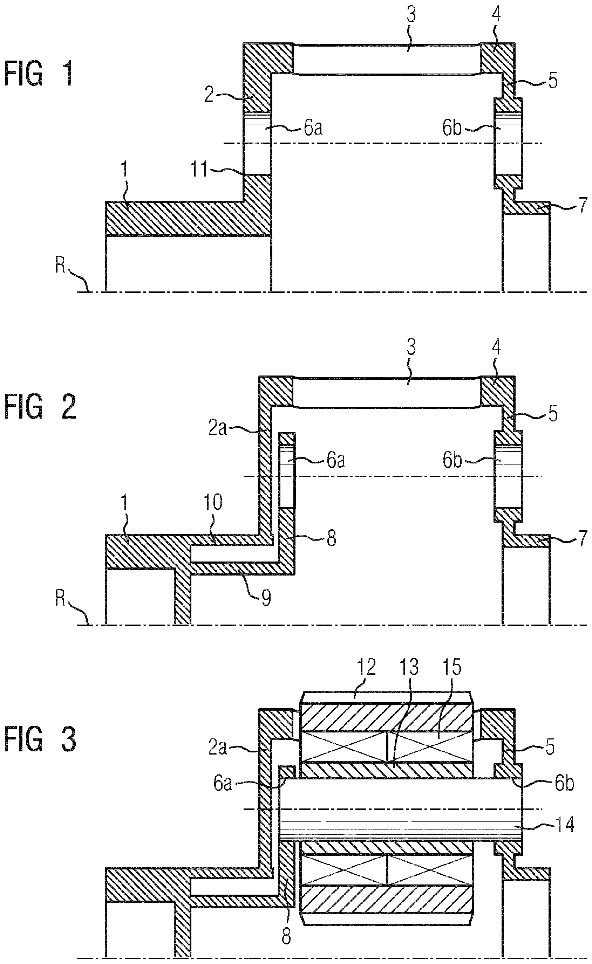

Fig. 1 zeigt einen herkömmlichen zweiwangigen Planetenträger. Eine antriebsseitige Nabe 1, die als ein axial verlaufender Rohrstumpf ausgebildet ist, ist mit einer antriebsseitigen Wange 2 verbunden, die als eine radial verlaufende Scheibe ausgebildet ist. Die antriebsseitige Nabe 1 wird auch als lange Nabe bezeichnet. Am äußeren Durchmesser der antriebsseitigen Wange 2 sind Stege 4 angeordnet, die als ein axial verlaufendes, mit Durchbrüchen 3 versehenes Rohr ausgebildet sind. Die Stege 4 verbinden die antriebsseitige Wange 2 mit einer abtriebsseitigen Wange 5, die ebenfalls als eine radial verlaufende Scheibe ausgebildet ist. Am Innendurchmesser der abtriebsseitigen Wange 5 ist eine abtriebsseitige Nabe 7 angeordnet, die als ein axial verlaufender Rohrstumpf ausgebildet ist. Die abtriebsseitige Nabe 7 wird auch als kurze Nabe bezeichnet. Der Planetenträger wird in einem Getriebegehäuse um seine Rotationsachse R drehbar gelagert, indem die beiden Naben 1, 7 mittels Lager, seien es Wälz- oder Gleitlager, gegenüber dem Getriebegehäuse abgestützt wird.

In die beiden Wangen 2, 5 sind jeweils axial fluchtende Bohrungen 6a, 6b eingebracht, welche Sitze für Planetenachsen bilden, auf denen Planetenräder drehbar gelagert werden. Dabei wird ein antriebsseitiges Ende einer Planetenachse in einen antriebsseitigen Achssitz 6a in der antriebsseitigen Wange 2 und ein abtriebsseitiges Ende einer Planetenachse in einen abtriebsseitigen Achssitz 6b in der abtriebsseitigen Wange 5 eingesetzt. An der Position, an welcher der antriebsseitige Achssitz 6a in der antriebsseitigen Wange 2 angeordnet ist, ist eine Kerbe 11 gebildet, an welcher Spannungsspitzen entstehen.

Die Stege 4 erstrecken sich zwischen den beiden Wangen 2, 5 und zwischen den Durchbrüchen 3, durch welche die Zähne der Planetenräder ragen, um mit einem den Planetenträger umgebenden Hohlrad zu kämmen. Im axialen Zentrum des Planetenträgers wird ein Sonnenrad angeordnet, welches ebenfalls mit den Planetenrädern kämmt.

Der Planetenträger kann in einem Planetengetriebe so angeordnet sein, dass ein Drehmoment eines Antriebs, beispielsweise einer Rotorwelle einer Windkraftanlage, auf die antriebsseitige Nabe 1 gebracht wird. Dabei kämmen die Planetenräder mit dem Hohlrad und dem zentral angeordneten Sonnenrad in einer Weise, dass bei einem feststehenden Hohlrad eine Drehung der antriebsseitigen Nabe 1 zu einer schnelleren Drehung des zentralen Sonnenrads führt. Die Drehung der Sonnenradachse, auf welcher das Sonnenrad drehfest angeordnet ist, wird als Abtrieb ggf. auf eine dem Planetenträger nachgeschaltete weitere Getriebestufe und dann schließlich auf eine dem Getriebe nachgeschaltete Maschine, z.B. einen Generator übertragen.

Entsprechend der Seite der Drehmomenteinleitung von einem Antrieb, in der in Fig. 1 gezeigten Darstellung auf der linken Seite, und der Seite der Drehmomentausleitung zu einem Abtrieb, in der in Fig. 1 gezeigten Darstellung auf der rechten Seite, werden die Bauteile des Planetenträgers wie die beiden Naben 1, 7, die beiden Wangen 2, 5 und die beiden Achssitze 6a, 6b mit den Positionsbestimmungen "abtriebsseitig" bzw. "abtriebsseitig" unterschieden.

Fig. 2 zeigt eine erste Ausgestaltung eines erfindungsgemäßen Planetenträgers. Der Aufbau des erfindungsgemäßen Planetenträgers entspricht weitgehend dem des herkömmlichen Planetenträger gemäß Fig. 1, bis auf die antriebsseitige Wange, welche erfindungsgemäß durch zwei parallel angeordnete antriebsseitige Wangen 2a, 8 ersetzt ist. Dabei unterscheidet man eine antriebsseitige innere Wange 8 und eine antriebsseitige äußere Wange 2a. Dabei ist die Unterscheidung zwischen "innerer" und "äußerer" Wange dadurch definiert, dass bei Betrachtung des Planetenträgers entlang der Rotationsachse R des Planetenträgers von der Antriebsseite her, d.h. in der Darstellung von Fig. 2 von links, die antriebsseitige äußere Wange 2a näher beim Betrachter liegt als die antriebsseitige innere Wange 8; somit ist die antriebsseitige äußere Wange 2a im "äußeren" Bereich des Planetenträgers angeordnet, wohingegen relativ dazu die antriebsseitige innere Wange 8 weiter im "Inneren" des Planetenträgers angeordnet ist.

Die antriebsseitige innere Wange 8 ist über eine antriebsseitige innere Nabe 9 an der antriebsseitigen Nabe 1 befestigt. Die antriebsseitige äußere Wange 2a ist über eine antriebsseitige äußere Nabe 10 an der antriebsseitigen Nabe 1 befestigt. Die antriebsseitige innere Nabe 9 ist dabei ein axial verlaufender Rohrstumpf, welcher näher an der Rotationsachse R angeordnet ist als der axial verlaufende Rohrstumpf, welcher die antriebsseitige äußere Nabe 10 bildet. Der antriebsseitige Achssitz 6a ist dabei ausschließlich in der antriebsseitigen inneren Wange 8 angeordnet.

Durch Parallelisierung des Lastpfads vom Bereich der Drehmomenteinleitung an der antriebsseitigen Nabe 1 zu den Achssitzen 6a der Planeten in der antriebsseitigen inneren Wange 8 und zu den Achssitzen 6b der Planeten in der abtriebsseitigen Wange 5 kann deren relative rotatorische Verlagerung unter Last über Variation der Steifigkeit des inneren Lastpfads, siehe Bezugszeichen 1 über 9, 8 zu 6a in Fig. 2, und des äu-ßeren Lastpfads, siehe Bezugszeichen 1 über 10, 2a, 3, 4, 5 zu 6b in Fig. 2, gesteuert werden. Durch die Trennung des Kraftflusses wird zusätzlich die Kerbe 11 zwischen den Achssitzen 6a zur antriebsseitigen Nabe 1 hin entschärft, bzw. die Kerbstelle 11 entfällt.

Die Drehsteifigkeit des äußeren ("langen") Lastpfads wird primär über die Dicke und die Breite der Stege 4 und der Grö-ße der Durchbrüche 3 für die Planetenräder, d.h. die Gestalt der Stege 4, die Wandstärke der äußeren Wange 2a, sowie die Dicke und die Länge der antriebsseitigen äußeren Nabe 10 beeinflusst. Die Drehsteifigkeit des inneren ("kurzen") Lastpfads wird primär über den Durchmesser und die Dicke der antriebsseitigen inneren Nabe 9 beeinflusst.

Dabei ist die Drehsteifigkeit des inneren Lastpfads, welcher von der antriebsseitigen Nabe 1 zu dem antriebsseitigen Achssitz 6a führt, auf die Torsionssteifigkeit des äußeren Lastpfads, welcher von der antriebsseitigen Nabe 1 zu dem abtriebsseitigen Achssitz 6b führt, so abgestimmt ist, dass sich unter Last eine definierte Relativverdrehung des antriebsseitigen Achssitzes 6a zu dem abtriebsseitigen Achssitz 6b einstellt.

Fig. 3 zeigt den Planetenträger gemäß Fig. 2 mit einem Planetenrad 12, einer Planetenachse 14, einem Lagerinnenring 13 und einem Planetenlager 15. Dabei sitzt das antriebsseitige Ende der Planetenachse 14 in dem antriebsseitigen Achssitz 6a, welcher in der antriebsseitigen inneren Wange 8 angeordnet ist, während das abtriebsseitige Ende der Planetenachse 14 in dem abtriebsseitigen Achssitz 6b sitzt, welcher wie beim herkömmlichen Planetenträger gemäß Fig. 1 in der abtriebsseitigen Wange 5 angeordnet ist.

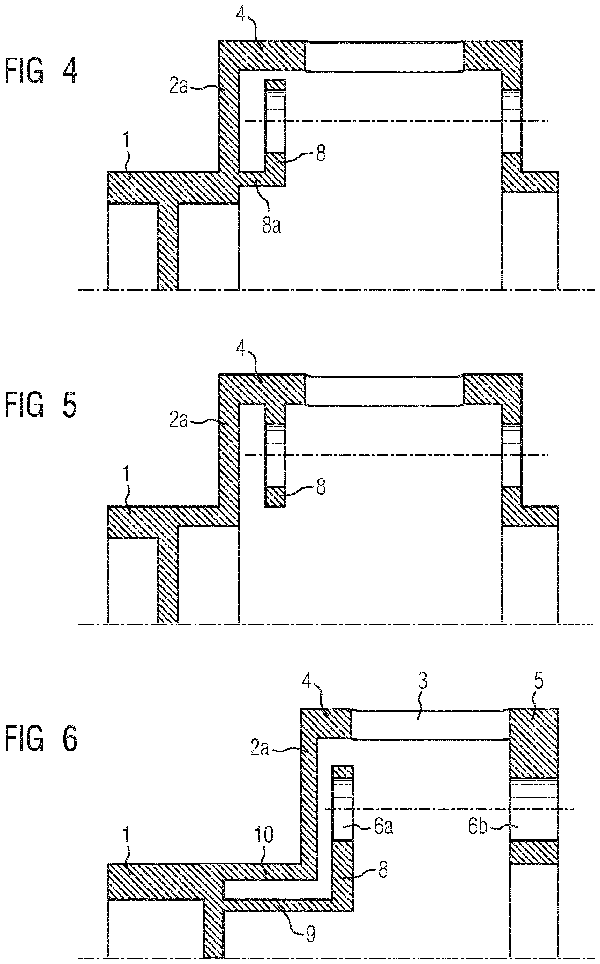

Fig. 4 zeigt eine weitere Ausgestaltung eines erfindungsgemäßen Planetenträgers mit beidseitiger Nabenlagerung. Dabei ist gegenüber der in Fig. 2 gezeigten Ausgestaltung die antriebsseitige innere Wange 8 nicht über eine innere Nabe 9 an der antriebsseitigen Nabe 1, sondern über einen axialen Rohrstummel 8a an der antriebsseitigen, äußeren Wange 2a befestigt.

Fig. 5 zeigt eine weitere Ausgestaltung eines erfindungsgemäßen Planetenträgers mit beidseitiger Nabenlagerung. Dabei ist gegenüber der in Fig. 2 gezeigten Ausgestaltung die antriebsseitige innere Wange 8 nicht über eine innere Nabe 9 an der antriebsseitigen Nabe 1, sondern an dem Steg 4 befestigt, genauer: an der antriebsseitigen Hälfte des Stegs 4.

Fig. 6 zeigt eine weitere Ausgestaltung eines erfindungsgemä-ßen Planetenträgers. Der Aufbau des Planetenträgers entspricht weitgehend dem des erfindungsgemäßen Planetenträgers gemäß Fig. 2, allerdings fehlt dem Planetenträger gemäß Fig. 6 die abtriebsseitige Lagerung in einer abtriebsseitigen Nabe. Stattdessen ist der Planetenträger gemäß Fig. 6 an der antriebsseitigen Nabe 1 einseitig, d.h. fliegend gelagert.

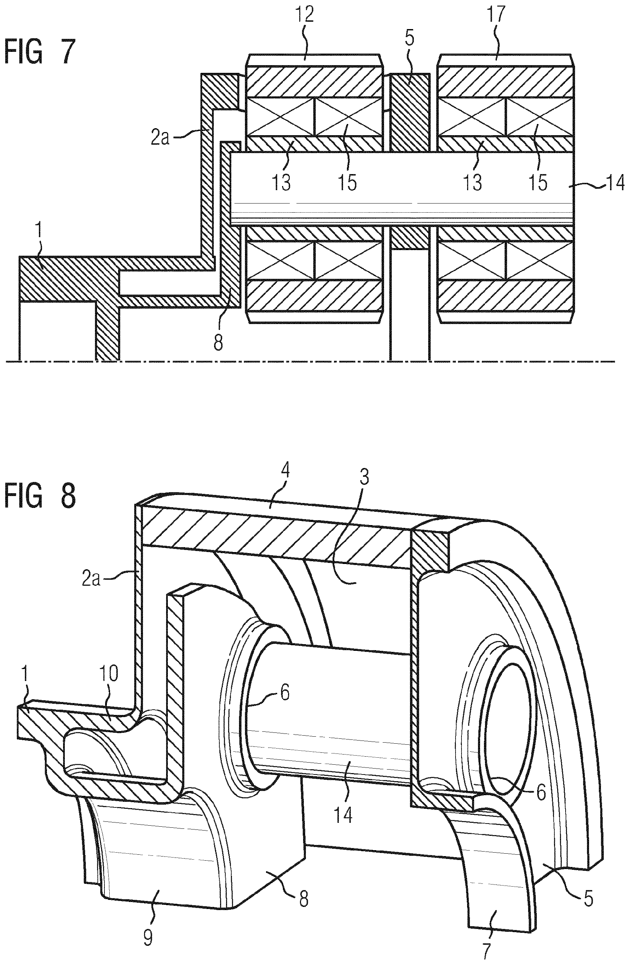

Fig. 7 zeigt eine weitere Ausgestaltung eines erfindungsgemäßen Planetenträgers mit einseitiger Lagerung. Dabei ragt die Planetenachse abtriebsseitig so weit über die abtriebsseitige Wange 5 hinaus, dass ein fliegend zwischen Hohlrad und Sonnenrad eingespannter Planetenrad 17 auf der Planetenachse 14 Platz findet. Daneben ist ein zwischen den antriebsseitigen Wangen 2a, 8 und der abtriebsseitigen Wange 5 eingeschobenes Planetenrad 12 auf der Planetenachse 14 gelagert.

Fig. 8 zeigt zur besseren Veranschaulichung der Erfindung eine perspektivische Ansicht eines Ausschnitts eines erfindungsgemäßen Planetenträgers, der dem in Fig. 2 dargestellten Planetenträger ähnelt, wobei die Planetenachse 14 ebenfalls eingezeichnet ist.

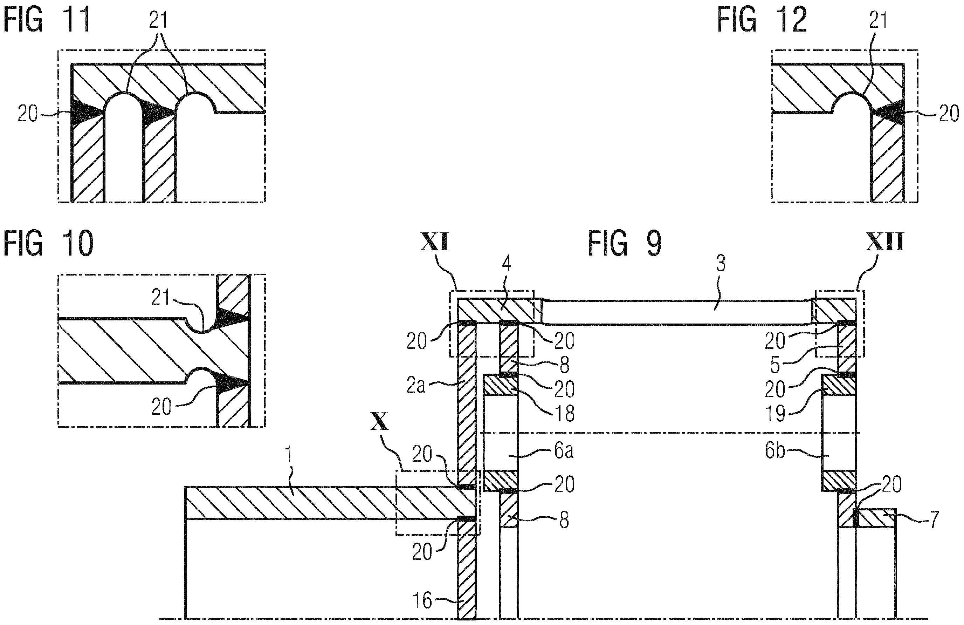

Fig. 9 zeigt einen Planetenträger, welcher ein Rohr mit für die nicht dargestellten Planeten vorgesehenen Durchbrüchen 3 als Steg 4, zwei Wangen 5, 8, eine Torsionsscheibe als äußere Wange 2a, eine Nabe 1, an welcher das Drehmoment anliegt, Verstärkungsringe 18, 19 zur Aufnahme der Planetenachsbolzen, eine optionale Nabe 7 zur Aufnahme eines möglichen Steglagers sowie eine optionale Verschlussscheibe 16 aufweist. Fig. 9 zeigt auch die Anordnung der Schweißnähte 20 zwischen den einzelnen Bauteilen. Alle Schweißnähte 20 sind durchgeschweißt und geschlossen.

Fig. 10 bis 12 zeigen vergrößerte Details X, XI und XII des in Fig. 9 dargestellten Planetenträgers, wobei neben den Schweißnähten 20 jeweils eine Entlastungskerbe 21 angeordnet ist.

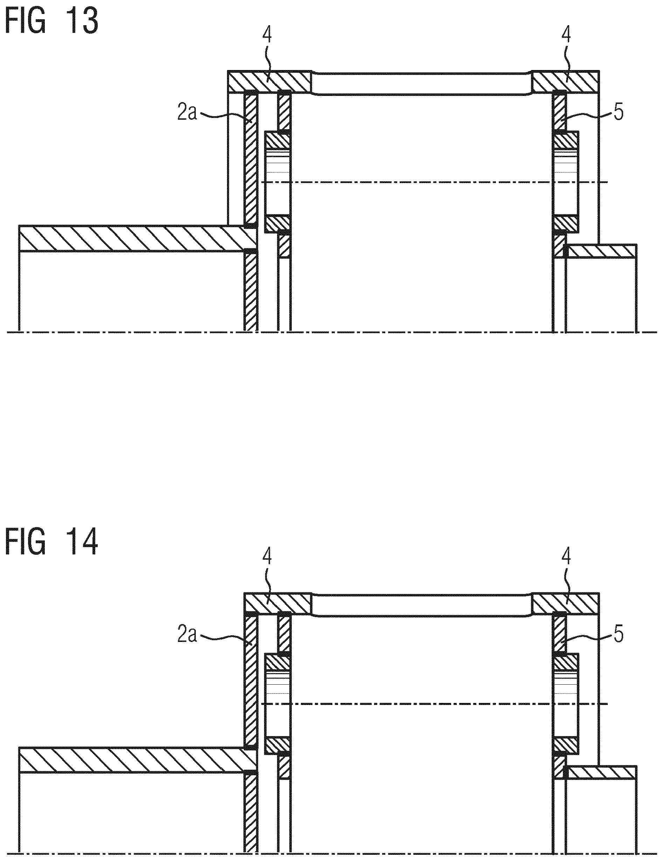

Fig. 13 zeigt einen Planetenträger mit einem die Stege 4 bildendem Rohr, welches an beiden Stirnseiten des Planetenträgers über die als Torsionsscheibe wirkende antriebsseitige äußere Wange 2a und die abtriebsseitige Wange 5 hinausragt.

Fig. 14 zeigt einen Planetenträger mit einem die Stege 4 bildendem Rohr, welches über die als Torsionsscheibe wirkende antriebsseitige äußere Wange 2a hinausragt. Je länger das die Stege 4 bildende Rohr ist, d.h. je größer der Überstand ist, desto höher ist seine Torsionssteifigkeit.

Die Fügereihenfolge (Schweißreihenfolge) ist vorzugsweise in der Reihenfolge der folgenden Schritte von a) bis g):
a) Antriebsseitige innere Wange 8 mit Verstärkungsring 18 zu Baugruppe 1.
b) Abtriebsseitige Wange 5 mit Verstärkungsring 19 und abtriebsseitiger Nabe 7 zur Baugruppe 2.
c)Antriebsseitige äußere Wange 2a mit antriebsseitiger Nabe 1 und optional Verschlussscheibe 16 zu Baugruppe 3.
d) Heften von Steg 4 mit Baugruppe 1 zu Baugruppe 4.
e) Heften von Baugruppe 4 mit Baugruppe 2 zu Baugruppe 5.
f) Verschweißen der Baugruppe 5.
g) Heften und Verschweißen von Baugruppen 3 und 5 zum fertigen Planetenträger.

Die Torsionssteifigkeit des Planetenträgers beeinflusst maßgeblich das Breitentragverhalten der Verzahnung. Dadurch, dass die die antriebsseitige Achssitze 6a aufweisende antriebsseitige innere Wange 8 von der Drehmoment einleitenden Nabe 1 getrennt ist, kann die Form der antriebsseitigen inneren Wange 8 so variiert werden, dass die Torsionsverformung des Stegs 4, welche zu einer rotatorischen Verlagerung der abtriebsseitigen Wange 5 und somit auch des abtriebsseitigen Achssitzes 6b führt, kompensiert werden kann.

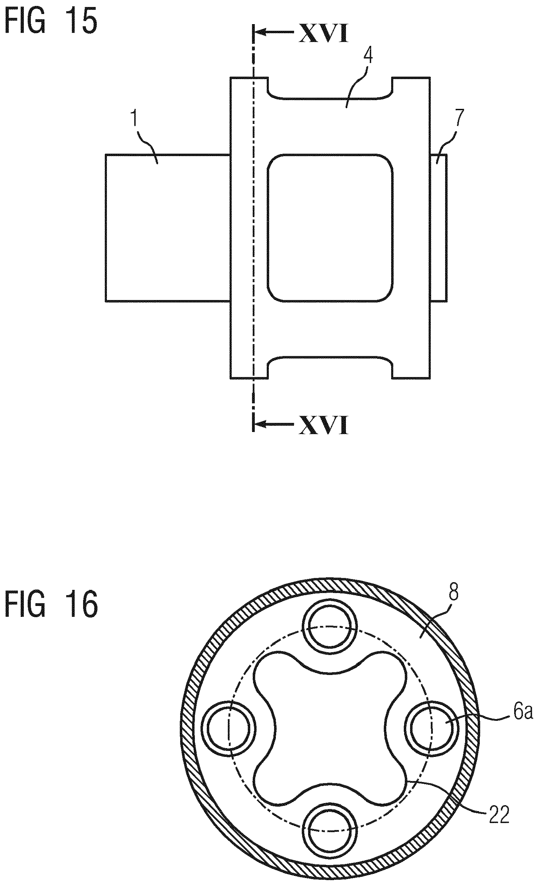

Fig. 15 zeigt eine Seitenansicht eines erfindungsgemäßen Planetenträgers mit einer antriebsseitigen Nabe 1, einer abtriebsseitigen Nabe 7 und einem dazwischen angeordneten Steg 4. Dabei ist der in Fig. 15 angegebene Schnitt XVI-XVI in Fig. 16 gezeigt.

Fig. 16 zeigt eine Draufsicht auf die antriebsseitige innere Wange 8 an dem in Fig. 15 angegebenen Schnitt XVI-XVI. Die Wange 8 weist Einschnürungen 22 zwischen den Achssitzen 6a auf, wobei durch die Tiefe der Einschnürungen 22 die Steifigkeit der antriebsseitigen inneren Wange 8 variiert werden kann.

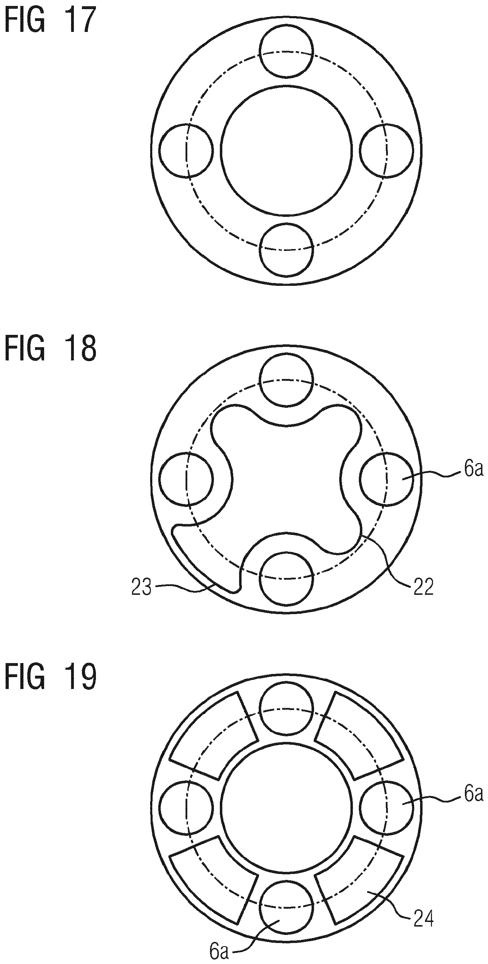

Fig. 17 bis 19 zeigen mögliche Ausführungen der Wangen 5, 8. Fig. 17 zeigt eine Vollscheibe mit einer maximalen Steifigkeit, wie sie vorzugsweise für die abtriebsseitige Wange 5 genutzt werden kann. Fig. 18 zeigt Einschnürungen 22, 23 zwischen den Achssitzen 6a, wobei durch eine unterschiedliche Tiefe der Einschnürungen 22, 23 die Steifigkeit der antriebsseitigen inneren Wange 8 variiert werden kann. Fig. 19 zeigt eine mögliche Ausgestaltung, wie die Steifigkeitsvariation der antriebsseitigen inneren Wange 8 durch Ausbrüche 24 zwischen den Achssitzen 6a erfolgen kann.

## Patentansprüche

1. Planetenträger, aufweisend eine antriebsseitige Nabe (1), eine antriebsseitige äußere Wange (2a), eine abtriebsseitige Wange (5) und mindestens einen die beiden besagten Wangen (2a, 5) verbindenden Steg (4), wobei die abtriebsseitige Wange (5) mindestens einen abtriebsseitigen Achssitz (6b) jeweils für ein abtriebsseitiges Ende einer Planetenachse aufweist,
**gekennzeichnet durch** eine antriebsseitige innere Wange (8), welche parallel zur antriebsseitigen äußeren Wange (2a) angeordnet ist und mindestens einen antriebsseitigen Achssitz (6a) jeweils für ein antriebsseitiges Ende einer Planetenachse aufweist, und der Planetenträger aus Gusseisen, Stahl, oder Kunststoff hergestellt ist.

2. Planetenträger nach Anspruch 1, wobei die antriebsseitige innere Wange (8) an der antriebsseitigen Nabe (1) und/oder an der antriebsseitigen äußeren Wange (2a) und/oder an dem mindestens einen Steg (4) befestigt ist.

3. Planetenträger nach Anspruch 1 oder 2, wobei die Drehsteifigkeit des inneren Lastpfads, welcher von der antriebsseitigen Nabe (1) zu dem antriebsseitigen Achssitz (6a) führt, auf die Drehsteifigkeit des äußeren Lastpfads, welcher von der abtriebsseitigen Nabe (1) zu dem abtriebsseitigen Achssitz (6b) führt, so abgestimmt ist, dass sich unter Last eine definierte Relativverdrehung des antriebsseitigen Achssitzes (6a) zu dem abtriebsseitigen Achssitz (6b) einstellt.

4. Planetenträger nach einem der vorhergehenden Ansprüche, wobei der Planetenträger aus mehreren Einzelteilen zusammengebaut ist, insbesondere durch Schweißverbindungen oder Schraubverbindungen.

5. Planetenträger nach einem der vorhergehenden Ansprüche, wobei der Planetenträger aus mehreren Einzelteilen durch Schweißverbindungen (20) zusammengebaut ist, wobei entlang zumindest einer Teillänge der Schweißverbindungen Entlastungskerben (21) angeordnet sind.

6. Planetenträger nach einem der vorhergehenden Ansprüche, wobei die Stege (4) durch ein Rohr mit Durchbrüchen (3) gebildet werden.
